(19) Europäisches Patentamt / European Patent Office / Office européen des brevets

(11) **EP 3 397 849 B1**

(12) **EUROPEAN PATENT SPECIFICATION**

(45) Date of publication and mention of the grant of the patent:
**25.03.2020 Bulletin 2020/13**

(21) Application number: **16831750.1**

(22) Date of filing: **21.12.2016**

(51) Int Cl.:
*F02D 41/24* (2006.01)  *F02D 19/06* (2006.01)
*F02D 41/00* (2006.01)  *F02D 41/26* (2006.01)
*F02D 41/14* (2006.01)

(86) International application number:
**PCT/IB2016/057867**

(87) International publication number:
**WO 2017/115228 (06.07.2017 Gazette 2017/27)**

(54) **METHOD FOR CONSTRUCTING A MATHEMATICAL MODEL OF A PETROL FUEL INJECTOR OF A BI-FUEL SUPPLY PLANT OF A MOTOR FOR A MOTOR VEHICLE AND ELECTRONIC CONTROL BOARD OF THE GAS INJECTORS USABLE IN A BI-FUEL SUPPLY PLANT OF A MOTOR FOR A MOTOR VEHICLE**

VERFAHREN ZUR HERSTELLUNG EINES MATHEMATISCHEN MODELLS EINES BENZINKRAFTSTOFFINJEKTORS EINER VERSORGUNGSANLAGE MIT ZWEI BRENNSTOFFEN EINES MOTORS FÜR EIN KRAFTFAHRZEUG UND ELEKTRONISCHE SCHALTTAFEL DER GASINJEKTOREN ZUR VERWENDUNG IN EINER VERSORGUNGSANLAGE MIT ZWEI BRENNSTOFFEN EINES MOTORS FÜR EIN KRAFTFAHRZEUG

PROCÉDÉ DE CONSTRUCTION D'UN MODÈLE MATHÉMATIQUE D'UN INJECTEUR DE CARBURANT À ESSENCE D'UNE INSTALLATION D'ALIMENTATION BI-COMBUSTIBLE D'UN MOTEUR POUR UN VÉHICULE AUTOMOBILE ET TABLEAU DE COMMANDE ÉLECTRONIQUE DES INJECTEURS DE GAZ UTILISABLE DANS UNE INSTALLATION D'ALIMENTATION BI-COMBUSTIBLE D'UN MOTEUR POUR UN VÉHICULE AUTOMOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2015 IT UB20159514**

(43) Date of publication of application:
**07.11.2018 Bulletin 2018/45**

(73) Proprietor: **Landi Renzo S.P.A.**
**42025 Cavriago (RE) (IT)**

(72) Inventor: **CAMPANI, Stefano**
**42032 Cervarezza (reggio Emilia) (IT)**

(74) Representative: **Dondi, Silvia**
**Bugnion S.p.A.**
**Largo Michele Novaro, 1/A**
**43121 Parma (IT)**

(56) References cited:
**CA-A1- 2 894 291**    **DE-A1-102006 043 243**
**DE-A1-102009 053 423**

## Description

### Technical Field

The present invention relates to a method for calibrating an electronic control board using a mathematical model of a petrol fuel injector of a bi-fuel supply plant of a motor for a motor vehicle, and an electronic control board of the gas injectors usable in a bi-fuel supply plant of a motor for a motor vehicle.

The present invention has been developed for general use and, in particular, for use in the motor vehicle after-sales sector (known as the "aftermarket").

### Prior Art

As is known, in a bi-fuel supply plant two control boards are present: one for the "petrol side" and the other for the "gas side".

In particular, the "petrol side" control board has a master function, so that in response to input motoring parameters, calculates the injection times and commands the corresponding petrol injectors for supplying the motor with a quantity of petrol such that the air-petrol mixture combustion ratio in the cylinders assumes a predetermined value, for example stoichiometric. On the other hand, the "gas side" (slave) control board drives the gas injectors with the aim of supplying the motor with a quantity of gas that is energetically equivalent.

The plant is retro-activated due to the presence of a lambda probe, for the control of the air/fuel ratio.

Given the intrinsic differences between the petrol injectors and the gas injectors, the energetic equivalence is established by means of appropriate correctors organised in "maps".

The installer traditionally sets the various motoring parameters and compiles the carburetion maps for the various functioning points of the motor. This is a long and laborious operation.

Further, as these operations are not always carried out on the motor bench, not all the working points of the motor can be tried out (both due to physical difficulties and for reasons of time), so that the maps present various boxes that are empty or completed by interpolation algorithms.

### Aim of the invention

In this context, the technical task objective at the base of the present invention relates to a method for calibrating an electronic control board using a mathematical model of a petrol fuel injector of a bi-fuel supply plant of a motor for a motor vehicle, and an electronic control board of the gas injectors usable in a bi-fuel supply plant of a motor for a motor vehicle, which obviate the drawbacks in the above-mentioned prior art.

In particular, an aim of the present invention is to provide a method for calibrating an electronic control board using a mathematical model of a petrol fuel injector of a bi-fuel supply plant of a motor for a motor vehicle, which is more rapid, precise and reliable than known methods.

A further aim of the present invention relates to a method for calibrating an electronic control board using a mathematical model of a petrol fuel injector of a bi-fuel supply plant of a motor for a motor vehicle, and an electronic control board of the gas injectors usable in a bi-fuel supply plant of a motor for a motor vehicle, usable in motor vehicle after-sales.

### Brief description of the drawings

Additional features and advantages of the present invention will become more apparent from the indicative and thus non-limiting description of a preferred but not exclusive embodiment of a method for calibrating an electronic control board using a mathematical model of a petrol fuel injector of a bi-fuel supply plant of a motor for a motor vehicle and an electronic control board of the gas injectors in a bi-fuel supply plant of a motor for a motor vehicle, as illustrated in the appended drawings, in which:

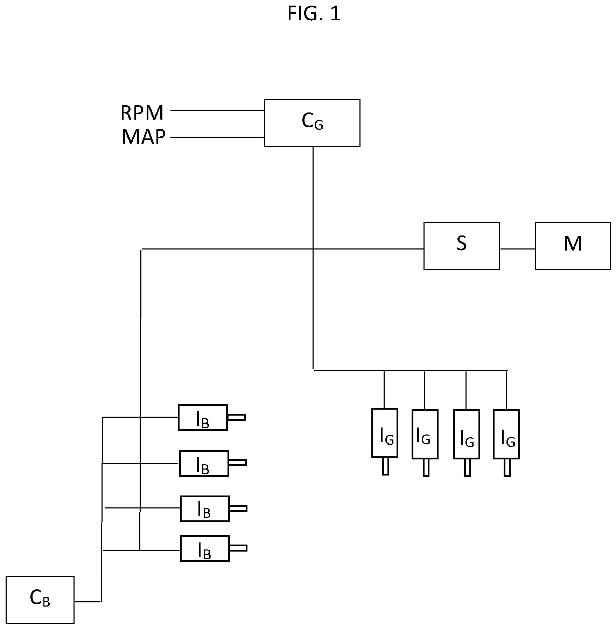

- figure 1 illustrates the simplified diagram of a bi-fuel supply plant of a motor for a motor vehicle;
- figure 2 illustrates characteristic curves of the flow rate of the gas as a function of the injection duration of the gas;
- figure 3 illustrates a characteristic curve of the flow rate of the petrol as a function of the injection duration of the petrol.

### Detailed description of preferred embodiments of the invention

With reference to the figures, reference numeral 1 denotes a bi-fuel supply plant for a motor M for a motor vehicle.

The bi-fuel supply plant is in itself of known type.

In this context, for simplicity of description reference is made to a bi-fuel supply plant 1 comprising the following essential elements:

- a plurality of petrol injectors $I_B$;
- a control board $C_B$ of the petrol injectors $I_B$;
- a plurality of gas injectors $I_G$;
- a control board $C_G$ of the gas injectors $I_G$;
- a switching unit S comprising a switch for switching supply to the cylinders of the motor M from petrol to gas and vice versa.

In particular, the control board $C_G$ of the gas injectors $I_G$ receives in inlet at least a first signal RPM representing the rotation and phase of the motor M and a second signal MAP representing the load of the motor M (detected by an appropriate sensor, not illustrated).

Each gas injector $I_G$ is characterised, for a predetermined pair of pressure p and temperature T values, by a curve of the flow rate $Q_G$ as a function of the injection duration $t_G$.

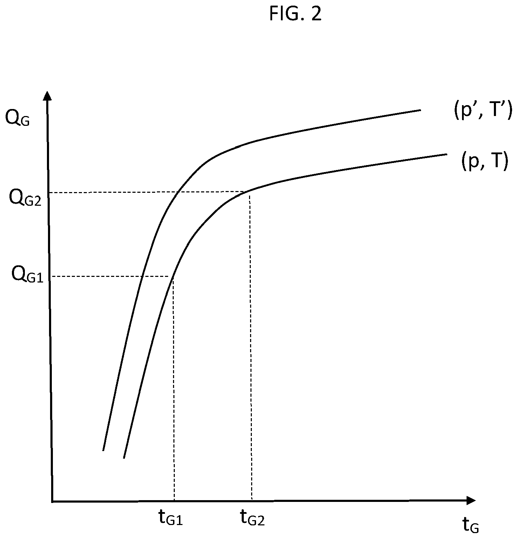

For example, in figure 2 two curves of the flow rate $Q_G$ are illustrated as a function of the injection duration $t_G$, for two different pairs of pressure p, p' and temperature T, T' values.

In this context, it is assumed that the characteristic curve of the gas injectors $I_G$ is known.

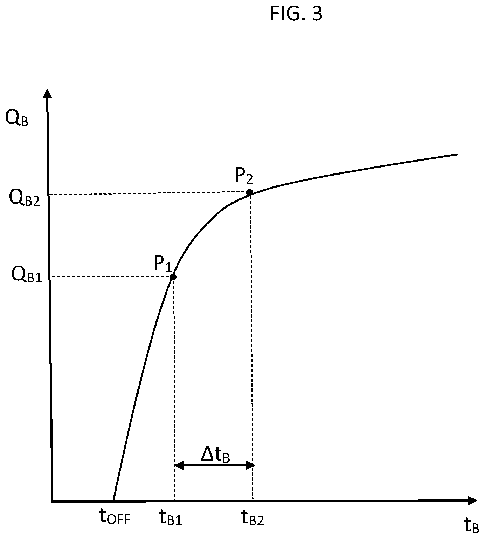

Likewise, the petrol injector $I_B$ is characterisable by means of a flow rate curve $Q_B$ as a function of the injection duration $t_B$, having a progression as illustrated in figure 3.

In particular, the flow rate $Q_B$ of the petrol is linked to the injection duration $t_B$ by the following formula:

$$Q_B = K \bullet \sqrt{p_B}(t_B - t_{OFF}),$$

where K is a coefficient representing the geometry of said petrol injector $I_B$, $p_B$ is an injection pressure of the petrol and $t_{OFF}$ is the intercept at the origin.

In this context, $p_B$ is taken to be the injection pressure value of the petrol from which the pressure value $p_{MAP}$ has already been subtracted, i.e. the absolute pressure value present in the aspirating manifold of the motor M.

In this context, for the petrol injector $I_B$ the coefficient K representing the geometry and the intercept at the origin $t_{OFF}$. are not known.

The method for calibrating an electronic control board using a mathematical model of a petrol injector $I_B$, i.e the method for determining the curve $Q_B(T_B)$ for the petrol injector $I_B$, is described in the following.

First of all, the engine (M) is supplied with petrol.

The motor M is taken into a first stable working condition to which corresponds a first value of a ratio A characteristic of carburetion.

In particular, the ratio A characteristic of the carburetion is the ratio between the air quantity actually requested for combustion with respect to the theoretical air requirement.

In the first working condition the motor M is preferably at a minimum working regime without loads.

In the first working condition, the injection pressure $p_{B1}$ is detected as well as and the injection duration $t_{B1}$ of the petrol injector $I_B$.

While maintaining the first working condition, the supply is switched from petrol to gas.

This determines an imbalance in carburetion. To return to the balanced condition, the injection duration $t_G$ of said gas injector $I_G$ is varied up to reaching a first injection duration $t_{G1}$ such that the characteristic ratio A of the carburetion newly assumes the first value.

On reaching the first value for the ratio λ, a situation is thus reached in which it is not required for the rapid correctors to intervene.

By knowing the characteristic curve of the gas injector $I_G$, the flow rate of dispensed gas $Q_{G1}$ corresponding to the first injection duration $t_{G1}$ is determined.

It is therefore possible to calculate the flow rate of petrol $Q_{B1}$ relative to the first working condition as a function of the energetic equivalence of the flow rate of dispensed gas $Q_{G1}$ at the first injection duration $t_{G1}$ of the gas injector $I_G$.

Thus a first point $P_1$ of the characteristic curve of the flow rate $Q_B$ of the petrol injector $I_B$ has been obtained, the x-axis whereof is represented by the injection duration $t_{B1}$ previously detected and the y-axis whereof is represented by the flow rate of petrol $Q_{B1}$ just calculated.

With the first point $P_1$ defined, the gas supply is newly switched from gas to petrol.

The motor M is taken into a second stable working condition to which corresponds a second value of the ratio A characteristic of carburetion.

In the second working condition the motor M is preferably working at a minimum working regime with a plurality of active loads (for example, air-conditioning, headlights, fans, windscreen wipers, etc.).

Alternatively, in the second working condition the motor M is in a loaded condition due to the movement of the motor vehicle.

In the second working condition, the injection pressure $p_{B2}$ is detected as well as and the injection duration $t_{B2}$ of the petrol injector $I_B$.

Maintaining the second working condition of the motor, the gas supply is newly switched from petrol to gas.

This determines an imbalance in carburetion. To return to the balanced condition, the injection duration $t_G$ of said gas injector $I_G$ is varied up to reaching a first injection duration $t_{G2}$ such that the characteristic ratio A of the carburetion newly assumes the second value.

On reaching the second value for the ratio λ, a situation is thus reached in which the rapid correctors do not intervene.

By knowing the characteristic curve of the gas injector $I_G$, the flow rate value of dispensed gas $Q_{G2}$ corresponding to the second injection duration tG2 is determined.

It is therefore possible to calculate the flow rate $Q_{B2}$ of the second working condition as a function of the energetic equivalence of the flow rate of dispensed gas $Q_{G2}$ at the second injection duration $t_{G2}$ of the gas injector $I_G$.

Thus a second point $P_2$ of the characteristic curve of the flow rate $Q_B$ of the petrol injector $I_B$ has been obtained, the x-axis whereof is represented by the injection duration $t_{B2}$ previously detected and the y-axis whereof is represented by the flow rate of petrol $Q_{B2}$ just calculated.

With two points $P_1$, $P_2$ of the characteristic curve of the flow rate $Q_B$ of the petrol injector $I_B$ known, the two unknown factors can be calculated, i.e. the coefficient K representing the geometry and the intercept at the origin $t_{OFF}$.

The distance between the first point $P_1$ and the second point $P_2$ should preferably be the same as or greater than a minimum value. Vice versa, should the distance be less than a minimum value, the second working condition is modified up to reaching (or exceeding) the minimum distance value between the two points $P_1$, $P_2$.

In particular, after having detected the injection duration

$t_{B2}$ of said petrol injector $I_B$ in the second working condition, the relative interval $\Delta_{tB}$ between the injection duration $t_{B2}$ in the second condition and the injection duration $t_{B1}$ in the first working condition is calculated.

As long as the relative interval $\Delta_{tB}$ is lower than a predefined threshold $\Delta_{tBmin}$, the following steps are cyclically carried out in chronological order:

- modifying the second working condition of the motor M;
- detecting the injection duration $t_{B2}$ of the petrol injector $I_B$ in the second working condition of the motor M;
- calculating the relative interval $\Delta_{tB}$ between the injection duration $t_{B2}$ in the second condition and the injection duration $t_{B1}$ in the first working condition.

Two points are sufficient for the characterisation of the petrol injector. Should it be desired to improve the precision of the model it is possible to identify two further points.

The control board $C_G$ of the gas injectors $I_G$ is configured for determining the characteristic curve of the flow rate $Q_B$ of a petrol injector $I_B$ using the above-described method.

After having characterised the petrol injector $I_B$, the control board $C_G$ of the gas injectors $I_G$ is able to determine the gas flow rate $Q_G$ to be supplied to the motor M.

In particular, during the functioning of the motor M with gas supply, the injection duration ($t_B$) of the petrol injectors $I_B$ is detected.

With the duration known, the petrol flow rate $Q_B$ and therefore, as a function of the energy equivalence, the gas flow rate $Q_B$ to be dispensed are calculated.

Once the petrol fuel injector $I_B$ has been characterised, the initial self-calibration of the plant 1 can be proceeded. It is further possible to include a periodic calibration during the driving of the vehicle.

From the description provided the characteristics of a method for calibrating an electronic control board using a mathematical model of a petrol fuel injector of a bi-fuel supply plant of a motor for a motor vehicle emerge clearly, as well as those of an electronic control board of the gas injectors usable in a bi-fuel supply plant of a motor for a motor vehicle, according to the present invention, as are the resulting advantages thereof.

In particular, in order to construct the mathematical model of the petrol fuel injector it is sufficient to set two stable working conditions of the motor. The method is therefore simple, reliable, rapid and can easily be used in any workshop (after-market applications).

Further, should it be desired to improve the precision of the characteristic curve of the petrol injectors, it is possible to set further stable working conditions of the motor.

**Claims**

1. Method for calibrating an electronic control board ($C_G$) using a mathematical model of a petrol fuel injector ($I_B$) of a bi-fuel supply plant of a motor (M) for a motor vehicle, said mathematical model being defined by a characteristic curve of a flow rate ($Q_B$) of the petrol as a function of an injection duration ($t_B$) of the petrol expressed by the relation

   $$Q_B = K \bullet \sqrt{p_B}\left(t_B - t_{OFF}\right),$$ where K is a coefficient representing a geometry of said petrol injector ($I_B$), $p_B$ is an injection pressure of the petrol and $t_{OFF}$ is the intercept at the origin, said method comprising steps of:

   supplying the engine (M) with petrol;
   taking the motor (M) into a first stable working condition to which corresponds a first value of a ratio ($\lambda$) characteristic of carburetion;
   detecting the injection pressure ($p_{B1}$) and the injection duration ($t_{B1}$) of said petrol injector ($I_B$) in said first working condition of the motor (M);
   maintaining the first working condition of the motor (M), switching the supply of petrol to gas by means of a gas injector ($I_G$) of which a characteristic curve of the flow rate ($Q_G$) is known as a function of an injection duration ($t_G$);
   varying the injection duration ($t_G$) of said gas injector ($I_G$) up to reaching a first injection duration ($t_{G1}$) such that the characteristic ratio ($\lambda$) of the carburetion assumes said first value;
   determining the flow rate of dispensed gas ($Q_{G1}$) corresponding to said first injection duration ($t_{G1}$);
   calculating the flow rate of petrol ($Q_{B1}$) relative to said first working condition as a function of an energetic equivalence of the flow rate of dispensed gas ($Q_{G1}$) in said first injection duration ($t_{G1}$) of the gas injector ($I_G$), the injection duration ($t_{B1}$) and the flow rate of petrol ($Q_{B1}$) relative to said first working condition respectively representing the x-axis and the y-axis of a first point ($P_1$) of the characteristic curve of the flow rate ($Q_B$) of the petrol injector ($I_B$);
   newly switching the gas supply to petrol;
   taking the motor (M) into a second stable working condition to which corresponds a second value of said characteristic ratio ($\lambda$) of carburetion;
   detecting the injection pressure ($p_{B2}$) and the injection duration ($t_{B2}$) of said petrol injector ($I_B$) in said second working condition of the motor (M);
   maintaining the second working condition of the motor (M), newly switching the supply from petrol to gas;
   varying the injection duration ($t_G$) of said gas injector ($I_G$) up to reaching a second injection duration ($t_{G2}$) such that the characteristic ratio ($\lambda$) of the carburetion assumes said second value; determining the flow rate of dispensed gas ($Q_{G2}$) corresponding to said second injection duration ($t_{G2}$); calculating the flow rate of petrol ($Q_{B2}$) relative to said second working condition as a function of an energetic equivalence of the flow rate of dispensed gas ($Q_{G2}$) in said second injection duration ($t_{G2}$) of the gas injector ($I_G$), the injection duration ($t_{B2}$) and the flow rate of petrol ($Q_{B2}$) relative to said second working condition respectively representing the x-axis and the y-axis of a second point ($P_2$) of the characteristic curve of the flow rate ($Q_B$) of the petrol injector ($I_B$); determining the representative coefficient ($K$) of the geometry of said petrol injector ($I_B$) and the intercept at the origin ($t_{OFF}$) starting from the injection pressure values ($p_{B1}$, $p_{B2}$) and the injection duration ($t_{B1}$, $t_{B2}$) detected respectively in the first and the second working conditions and from the petrol flow rate values ($Q_{B1}$, $Q_{B2}$) calculated in said two same working conditions of the motor (M).

2. Method according to claim 1, further comprising the following steps:

after having detected the injection duration ($t_{B2}$) of said petrol injector ($t_B$) in the second working condition of the motor (M), calculating the relative interval ($\Delta_{tB}$) between the injection duration ($t_{B2}$) in said second condition and the injection duration ($t_{B1}$) in the first working condition; as long as the relative interval ($\Delta_{tB}$) is lower than a predefined threshold ($\Delta_{tBmin}$), cyclically carrying out following steps in chronological order:

modifying the second working condition of the motor (M); detecting the injection duration ($t_{B2}$) of said petrol injector ($I_B$) in said second working condition of the motor (M); calculating the relative interval ($\Delta_{tB}$) between the injection duration ($t_{B2}$) in the second condition and the injection duration ($t_{B1}$) in the first working condition;

3. Method according to any one of the preceding claims, wherein in said first working condition the motor (M) is at a minimum working regime without loads and in said second working condition the motor (M) is working at a minimum working regime with a plurality of loads in activity.

4. Electronic control board ($C_G$) of the gas injectors ($I_G$) usable in a bi-fuel supply plant of a motor (M) for a motor vehicle, said control board ($C_G$) being configured for:

determining the characteristic curve of the flow rate ($Q_B$) of a petrol injector ($I_B$) using the method according to one of claims from 1 to 3; detecting the injection pressure ($t_B$) of petrol injectors ($I_B$) during the functioning of the motor (M) with a gas supply; using said characteristic curve of the flow rate ($Q_B$) of a petrol injector ($I_B$) for calculating an equivalent petrol flow rate ($Q_B$) as a function of the injection duration ($t_B$) detected of petrol injectors ($I_B$); calculating the gas flow rate ($Q_G$) to be dispensed as a function of the energy equivalence of said petrol flow rate ($Q_B$); supplying the calculated gas flow rate ($Q_G$).

5. Computer program product directly loadable in a memory of a control board ($C_G$) of gas injectors ($I_G$) of a bi-fuel supply plant, said computer program product comprising instructions which, when the program is executed by the control board ($C_G$) of claim 4 cause said control board ($C_G$) to carry out the method according to claims from 1 to 3.

**Patentansprüche**

1. Verfahren zum Kalibrieren einer elektronischen Schalttafel ($C_G$) anhand eines mathematischen Modells eines Benzinkraftstoffinjektors ($I_B$) einer Versorgungsanlage mit zwei Brennstoffen eines Motors (M) für ein Kraftfahrzeug, wobei das mathematische Modell durch eine Kennlinie einer Durchflussmenge ($Q_B$) des Benzins als Funktion einer Einspritzdauer ($t_B$) des Benzins definiert ist, ausgedrückt durch das Verhältnis $Q_B = K \bullet \sqrt{p_B}\,(t_B - t_{OFF})$,

wobei K ein Koeffizient ist, der eine Geometrie des Benzininjektors ($I_B$) darstellt, $p_B$ ein Einspritzdruck des Benzins ist und $t_{OFF}$ der Schnittpunkt am Ursprung ist, wobei das Verfahren die folgenden Schritte umfasst:

Versorgen des Motors (M) mit Benzin; Versetzen des Motors (M) in eine erste stabile Arbeitsbedingung, der ein erster Wert eines für die Vergasung charakteristischen Verhältnisses ($\lambda$) entspricht; Erfassen des Einspritzdrucks ($p_{B1}$) und der Einspritzdauer ($t_{B1}$) des Benzininjektors ($I_B$) in der ersten Arbeitsbedingung des Motors (M); Aufrechterhalten der ersten Arbeitsbedingung des Motors (M), Umschalten der Benzinversorgung auf Gas mittels eines Gasinjektors ($I_G$),

dessen Kennlinie der Durchflussmenge ($Q_G$) als Funktion einer Einspritzdauer ($t_G$) bekannt ist;

Variieren der Einspritzdauer ($t_G$) des Gasinjektors ($I_G$) bis zum Erreichen einer ersten Einspritzdauer ($t_{G1}$), so dass das charakteristische Verhältnis ($\lambda$) der Vergasung den ersten Wert annimmt;

Bestimmen der Durchflussmenge des abgegebenen Gases ($Q_{G1}$) entsprechend der ersten Einspritzdauer ($t_{G1}$);

Berechnen der Durchflussmenge von Benzin ($Q_{B1}$) relativ zu der ersten Arbeitsbedingung als Funktion einer energetischen Äquivalenz der Durchflussmenge von abgegebenem Gas ($Q_{G1}$) in der ersten Einspritzdauer ($t_{G1}$) des Gasinjektors ($I_G$), der Einspritzdauer ($t_{B1}$) und der Durchflussmenge von Benzin ($Q_{B1}$) relativ zur ersten Arbeitsbedingung, die jeweils die x-Achse und die y-Achse eines ersten Punktes ($P_1$) der Kennlinie der Durchflussmenge ($Q_B$) des Benzinsinjektors ($I_B$) darstellen;

Umschalten der Gasversorgung neu auf Benzin;

Versetzen des Motors (M) in eine zweite stabile Arbeitsbedingung, der ein zweiter Wert des charakteristischen Verhältnisses ($\lambda$) der Vergasung entspricht;

Erfassen des Einspritzdrucks ($p_{B2}$) und der Einspritzdauer ($t_{B2}$) des Benzininjektors ($I_B$) in der zweiten Arbeitsbedingung des Motors (M);

Aufrechterhalten der zweiten Arbeitsbedingung des Motors (M), erneutes Umschalten der Versorgung von Benzin auf Gas;

Variieren der Einspritzdauer ($t_G$) des Gasinjektors ($I_G$) bis zum Erreichen einer zweiten Einspritzdauer ($t_{G2}$), so dass das charakteristische Verhältnis ($\lambda$) der Vergasung den zweiten Wert annimmt;

Bestimmen der Durchflussmenge des abgegebenen Gases ($Q_{G2}$) entsprechend der zweiten Einspritzdauer ($t_{G2}$);

Berechnen der Durchflussmenge von Benzin ($Q_{B2}$) relativ zu der zweiten Arbeitsbedingung als Funktion einer energetischen Äquivalenz der Durchflussmenge von abgegebenem Gas ($Q_{G2}$) in der zweiten Einspritzdauer ($t_{G2}$) des Gasinjektors ($I_G$), der Einspritzdauer ($t_{B2}$) und der Durchflussmenge von Benzin ($Q_{B2}$) relativ zur zweiten Arbeitsbedingung, die jeweils die x-Achse und die y-Achse eines zweiten Punktes ($P_2$) der Kennlinie der Durchflussmenge ($Q_B$) des Benzinsinjektors ($I_B$) darstellen;

Bestimmen des repräsentativen Koeffizienten (K) der Geometrie des Benzininjektors ($I_B$) und des Schnittpunkts am Ursprung ($t_{OFF}$) ausgehend von den Einspritzdruckwerten ($p_{B1}$,$p_{B2}$) und der Einspritzdauer ($t_{B1}$, $t_{B2}$), die jeweils in der ersten und zweiten Arbeitsbedingung erfasst wurden und aus den Benzindurchflussmengenwerten ($Q_{B1}$, $Q_{B2}$), die unter den beiden gleichen Arbeitsbedingungen des Motors (M) berechnet wurden.

2. Verfahren nach Anspruch 1, umfassend zudem folgende Schritte:

nachdem die Einspritzdauer ($t_{B2}$) des Benzininjektors ($t_B$) in der zweiten Arbeitsbedingung des Motors (M) erfasst wurde, Berechnen des relativen Intervalls ($\Delta_{tB}$) zwischen der Einspritzdauer ($t_{B2}$) in der zweiten Bedingung und der Einspritzdauer ($t_{B1}$) in der ersten Arbeitsbedingung;

solange das relative Intervall ($\Delta_{tB}$) kleiner als eine vorgegebene Schwelle ($\Delta_{tBmin}$) ist, werden zyklisch folgende Schritte in chronologischer Reihenfolge ausgeführt:

Ändern der zweiten Arbeitsbedingung des Motors (M);

Erfassen der Einspritzdauer ($t_{B2}$) des Benzininjektors ($I_B$) in der zweiten Arbeitsbedingung des Motors (M);

Berechnen des relativen Intervalls ($\Delta_{tB}$) zwischen der Einspritzdauer ($t_{B2}$) in der zweiten Bedingung und der Einspritzdauer ($t_{B1}$) in der ersten Arbeitsbedingung.

3. Verfahren nach einem der vorhergehenden Ansprüche, wobei sich der Motor (M) in der ersten Arbeitsbedingung in einem minimalen Arbeitsbereich ohne Lasten befindet und sich der Motor (M) in der zweiten Arbeitsbedingung in einem minimalen Arbeitsbereich mit einer Vielzahl an tätigen Lasten befindet.

4. Elektronische Schalttafel ($C_G$) der Gasinjektoren ($I_G$) zur Verwendung in einer Versorgungsanlage mit zwei Brennstoffen eines Motors (M) für ein Kraftfahrzeug, wobei die Schalttafel ($C_G$) konfiguriert ist, zum:

Bestimmen der Kennlinie der Durchflussmenge ($Q_B$) eines Benzininjektors ($I_B$) unter Verwendung des Verfahrens nach einem der Ansprüche 1 bis 3;

Erfassen des Einspritzdrucks ($t_B$) von Benzininjektoren ($I_B$) während des Betriebs des Motors (M) mit einer Gasversorgung;

Verwenden der Kennlinie der Durchflussmenge ($Q_B$) eines Benzininjektors ($I_B$) zum Berechnen einer äquivalenten Benzindurchflussmenge ($Q_B$) als Funktion der von Benzininjektoren ($I_B$) erfassten Einspritzdauer ($t_B$);

Berechnen der abzugebenden Gasdurchflussmenge ($Q_G$) als Funktion der Energieäquivalenz der Benzindurchflussmenge ($Q_B$);

Versorgen der berechneten Gasdurchflussmenge ($Q_G$).

5. Computerprogrammprodukt, das direkt in einen Speicher einer Schalttafel (C$_G$) von Gasinjektoren (I$_G$) einer Versorgungsanlage mit zwei Brennstoffen geladen werden kann, wobei das Computerprogrammprodukt Anweisungen umfasst, die, wenn das Programm von der Schalttafel (C$_G$) von Anspruch 4 ausgeführt wird, bewirkt, dass die Schalttafel (C$_G$) das Verfahren nach den Ansprüchen 1 bis 3 ausführt.

**Revendications**

1. Procédé de calibrage d'un tableau de commande (C$_G$) électronique utilisant un modèle mathématique d'un injecteur (I$_B$) de carburant à essence d'une installation d'alimentation bi-combustible d'un moteur (M) pour un véhicule automobile, ledit modèle mathématique étant défini par une courbe caractéristique d'un débit (Q$_B$) d'essence en fonction d'une durée d'injection (t$_B$) de l'essence exprimée par la relation

$$Q_B = K \bullet \sqrt{p_B}\left(t_B - t_{OFF}\right),$$

où K est un coefficient représentant une géométrie dudit injecteur d'essence (I$_B$), p$_B$ est une pression d'injection de l'essence et t$_{OFF}$ est l'interception à l'origine, ledit procédé comprenant les étapes de :

alimenter le moteur (M) en essence ;
amener le moteur (M) dans une première condition de fonctionnement stable à laquelle correspond une première valeur d'un rapport (λ) caractéristique de la carburation ; détecter la pression d'injection (p$_{B1}$) et la durée d'injection (t$_{B1}$) dudit injecteur d'essence (I$_B$) dans ladite première condition de fonctionnement du moteur (M) ;
maintenir la première condition de fonctionnement du moteur (M), en commutant l'alimentation en essence vers le gaz au moyen d'un injecteur de gaz (I$_G$) dont une courbe caractéristique du débit (Q$_G$) est connue en fonction d'une durée d'injection (t$_G$) ;
varier la durée d'injection (t$_G$) dudit injecteur de gaz (I$_G$) jusqu'à atteindre une première durée d'injection (t$_{G1}$) telle que le rapport caractéristique (λ) de la carburation prenne ladite première valeur ;
déterminer le débit de gaz distribué (Q$_{G1}$) correspondant à ladite première durée d'injection (t$_{G1}$) ;
calculer le débit d'essence (Q$_{B1}$) par rapport à ladite première condition de fonctionnement en fonction d'une équivalence énergétique du débit de gaz distribué (Q$_{G1}$) dans ladite première durée d'injection (t$_{G1}$) de l'injecteur de gaz (I$_G$), la durée d'injection (t$_{B1}$) et le débit d'essence (Q$_{B1}$) par rapport à ladite première condition de fonctionnement représentant respectivement l'axe des x et l'axe des y d'un premier point (P$_1$) de la courbe caractéristique du débit (Q$_B$) de l'injecteur d'essence (I$_B$) ;
commuter à nouveau l'alimentation en gaz vers l'essence ;
amener le moteur (M) dans une seconde condition de fonctionnement stable à laquelle correspond une seconde valeur dudit rapport caractéristique (λ) de carburation ;
détecter la pression d'injection (p$_{B2}$) et la durée d'injection (t$_{B2}$) dudit injecteur d'essence (I$_B$) dans ladite seconde condition de fonctionnement du moteur (M) ;
maintenir la seconde condition de fonctionnement du moteur (M), en commutant à nouveau l'alimentation en essence au gaz ;
varier la durée d'injection (t$_G$) dudit injecteur de gaz (I$_G$) jusqu'à atteindre une seconde durée d'injection (t$_{G2}$) telle que le rapport caractéristique (λ) de la carburation prenne ladite seconde valeur ;
déterminer le débit de gaz distribué (Q$_{G2}$) correspondant à ladite seconde durée d'injection (t$_{G2}$) ;
calculer le débit d'essence (Q$_{B2}$) par rapport à ladite seconde condition de fonctionnement en fonction d'une équivalence énergétique du débit de gaz distribué (Q$_{G2}$) dans ladite seconde durée d'injection (t$_{G2}$) de l'injecteur de gaz (I$_G$), la durée d'injection (t$_{B2}$) et le débit d'essence (Q$_{B2}$) par rapport à ladite seconde condition de fonctionnement représentant respectivement l'axe des x et l'axe des y d'un second point (P$_2$) de la courbe caractéristique du débit (Q$_B$) de l'injecteur d'essence (I$_B$) ;
déterminer le coefficient représentatif (K) de la géométrie dudit injecteur d'essence (I$_B$) et l'interception à l'origine (t$_{OFF}$) à partir des valeurs de pression d'injection (p$_{B1}$, p$_{B2}$) et de la durée d'injection (t$_{B1}$, t$_{B2}$) détectées respectivement dans les première et seconde conditions de fonctionnement et à partir des valeurs de débit d'essence (Q$_{B1}$, Q$_{B2}$) calculées dans lesdites deux mêmes conditions de fonctionnement du moteur (M).

2. Procédé selon la revendication 1, comprenant de plus les étapes suivantes :

après avoir détecté la durée d'injection (t$_{B2}$) dudit injecteur d'essence (t$_B$) dans la seconde condition de fonctionnement du moteur (M), calculer l'intervalle relatif (Δ$_{tB}$) entre la durée d'injection (t$_{B2}$) dans ladite seconde condition et la durée d'injection ($t_{B1}$) dans la première condition de fonctionnement ;

tant que l'intervalle relatif ($\Delta_{tB}$) est inférieur à un seuil prédéfini ($\Delta_{tBmin}$), effectuer cycliquement les étapes suivantes dans l'ordre chronologique :

modifier la seconde condition de fonctionnement du moteur (M) ;

détecter la durée d'injection ($T_{B2}$) dudit injecteur d'essence ($I_B$) dans ladite seconde condition de fonctionnement du moteur (M) ;

calculer l'intervalle relatif ($\Delta_{tB}$) entre la durée d'injection ($t_{B2}$) dans la deuxième condition et la durée d'injection ($t_{B1}$) dans la première condition de fonctionnement.

**3.** Procédé selon l'une quelconque des revendications précédentes, dans lequel dans ladite première condition de fonctionnement, le moteur (M) est à un régime de fonctionnement minimum sans charges et, dans ladite seconde condition de fonctionnement, le moteur (M) est à un régime de fonctionnement minimum avec une pluralité de charges en activité.

**4.** Tableau de commande ($C_G$) électronique des injecteurs de gaz ($I_G$) utilisables dans une installation d'alimentation bi-combustible d'un moteur (M) pour un véhicule automobile, ledit tableau de commande ($C_G$) étant configuré pour :

déterminer la courbe caractéristique du débit ($Q_B$) d'un injecteur d'essence ($I_B$) en utilisant le procédé selon l'une des revendications de 1 à 3 ;

détecter la pression d'injection ($t_B$) des injecteurs d'essence ($I_B$) pendant le fonctionnement du moteur (M) avec une alimentation en gaz ;

utiliser ladite courbe caractéristique du débit ($Q_B$) d'un injecteur d'essence ($I_B$) pour calculer un débit d'essence ($Q_B$) équivalent en fonction de la durée d'injection ($t_B$) détectée des injecteurs d'essence ($I_B$) ;

calculer le débit de gaz ($Q_G$) à distribuer en fonction de l'équivalence énergétique dudit débit d'essence ($Q_B$) ;

fournir le débit de gaz ($Q_G$) calculé.

**5.** Produit-programme informatique pouvant être chargé directement dans une mémoire d'un tableau de commande ($C_G$) d'injecteurs de gaz ($I_G$) d'une installation d'alimentation bi-combustible, ledit produit-programme informatique comprenant des instructions qui, lorsque le programme est exécuté par le tableau de commande ($C_G$) de la revendication 4, font en sorte que ledit tableau de commande ($C_G$) exécute le procédé selon les revendications de 1 à 3.

FIG. 1

FIG. 2

FIG. 3